# EUROPEAN PATENT APPLICATION

(11) **EP 3 255 296 A1**
(43) Date of publication of application: **13.12.2017**
(21) Application number: 17000127.5
(22) Date of filing: 25.01.2017
(51) Int. Cl.: F16D 11/06, F16D 11/12, F16D 11/16, B60B 37/06

(54) **DEVICE FOR THE SHAFT-HUB COUPLING, IN PARTICULAR FOR THE AUTOMOTIVE SECTOR**

(30) Priority: 03.03.2016 IT UA20161308
(71) Applicant: Fizzarotti, Emanuele, 52010 Subbiano (Arezzo) (IT); Tumolo, Fabrizio, 00139 Roma (IT)
(72) Inventor: Fizzarotti, Emanuele, 52010 Subbiano (Arezzo) (IT); Tumolo, Fabrizio, 00139 Roma (IT)
(74) Representative: Olivieri, Antonella

(57) **Abstract**

A device for the shaft-hub coupling, in particular for the automotive sector. The peculiarity of this device is that it comprises a box-like body (4) arranged to be inserted inside a shaft (2), to be coupled with a hub (3). The body (4) further has removable means (5, 5', 5"), operable by means of a lock (6), for engagement with the hub (3).

## Description

The present invention relates to a device for the shaft-hub coupling, in particular for the automotive sector.

To date, changing a punctured or damaged wheel of a car can be a serious challenge, since it is necessary to raise the car with the jack, remove the hub cap and loosen the nuts, which are usually from five to eight in number, possibly by using a spider spanner, but often by means of the box spanner provided by the car manufacturers.

After having removed the wheel to be changed, it will be necessary to replace it with the spare wheel, which must be mounted so as to engage with the centering pin projecting from the shaft and well tightened to the shaft.

To loosen the nuts of the bolts securing the wheel to the drum, it is necessary to exert great force, also due to the fact that the bolts are often oxidized or are very tightened in workshop, where pneumatic equipment are used for their tightening.

This problem sometimes means that less prepared or less robust individuals, for example kids or women, require medical intervention for wounds, bruises or muscle strains caused by the use of inappropriate tools or following an uncoordinated use of the traditional key to change the car wheel.

In some cases, an emergency medical intervention is sought as a result of ankle or wrist sprains or for knee or forehead bruises.

However, even strong men may be injured, especially if the bolts are too tight. It happens in fact that, since there no other solutions, the victim hit the key with the foot resulting in traumatic consequences.

This happens because by exerting a great force on the key to loosen the nuts, often by pushing on the key with all the weight of the body, it is brought off-axis causing the head of the bolt to get out, and consequently the operator loses his balance.

In addition, it may happen that an excessive use of force, or the use of kicks, can strip the nut, as it is difficult to maintain a full contact.

In addition to these difficulties, there are also possible extreme factors to be considered that certainly does not help the operations described above, i.e., the cold, the rain, the heat or the darkness, that often does not allow a good view of the centering pin.

Moreover, the lack of simple but necessary equipment, such as a pair of work gloves or the spider spanner, can make the wheel change extremely difficult, if not impossible.

In addition to the above, for heavy vehicles the difficulties and dangers are greater due to the size and the overall dimensions of vehicles, as well as for the size of the wheels.

The aim of the invention is to eliminate the drawbacks described above in known types of device for the shaft-hub coupling, in particular for the automotive sector, which is simple and fast to be decoupled and coupled again in a safety condition.

In the context of the above task, a main object of the present invention is to provide a device for the shaft-hub coupling, in particular for the automotive sector, which allows the change of a damaged or punctured wheel with great ease, even in extreme conditions.

Another object of the invention is to enable the shaft-hub coupling and decoupling in the automotive sector, without exerting a force.

Another object of the present invention is to allow the change of the vehicle wheel, without the need of specific tools.

Another object of the device according to the invention is to provide a new type of shaft-hub coupling, which can be used in any mechanic fields. Another object of the invention is to realize a device for the shaft-hub coupling, in particular for the automotive sector, by using readily commercially available means and commonly used materials, so that the device is economically competitive.

This task, as well as these and others objects, which will become apparent hereinafter, are achieved by the device for the shaft-hub coupling, in particular for the automotive sector, according to the invention, characterized in that it comprises a box-like body arranged to be inserted inside a shaft to be coupled with a hub, having removable means of engagement with said hub, said removable means being activatable by means of a lock.

Further features and advantages of the invention will be more apparent from the description of a preferred but not exclusive embodiment of the device for the shaft-hub coupling, in particular for the automotive sector, illustrated by way of non-limiting example with the aid of the accompanying drawings, wherein:
Figure 1 is a section substantially normal to the longitudinal axis 20 of the shaft 2, of a variant 1 of the device for the shaft-hub coupling, in particular for the automotive sector;
Figure 2 shows, in a plan view, a shaft 2 and a hub 3 coupled to each other by means of the device 1 with a half that is sectioned through a plane passing through the solar mechanism and substantially normal to the axis 20;

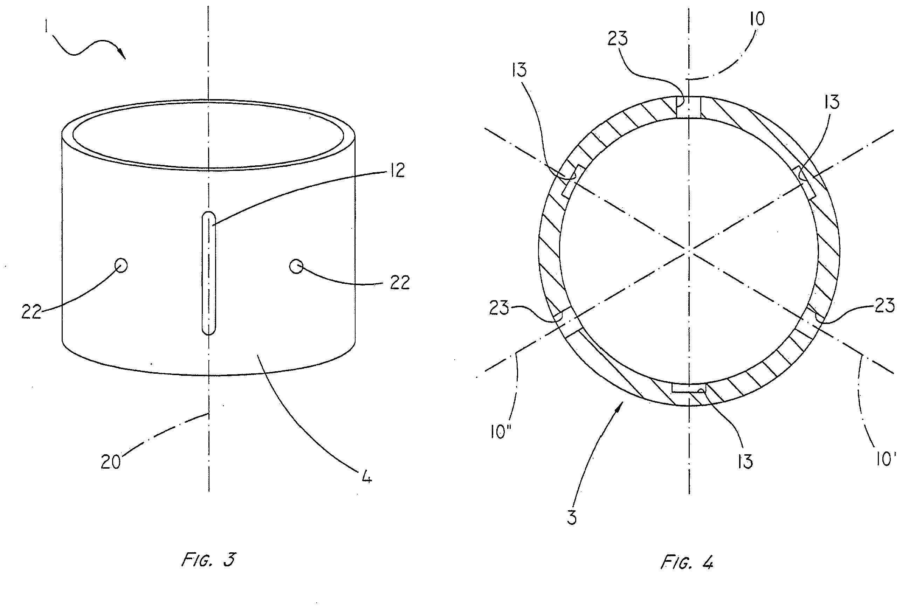

Figure 3 shows, in a perspective view, the shaft 2 adapted to be coupled to a hub by means of the device 1;
Figure 4 is a section substantially normal to the axis 20 of the hub 3;
Figure 5 shows a shaft-hub coupling, by means of the device 1 sectioned through a plane passing through the direction of engagement 10 and the axis 20, with an enlargement within the lock 6 engaged by the key 9;
Figure 6 shows a shaft-hub coupling, by means of the device 1, in the neutral position, sectioned through a plane substantially normal to the axis 20, with an enlargement at the lock 6;
Figure 7 shows a shaft-hub coupling, by means of the device 1, in an interference position, sectioned by means of a plane substantially normal to the axis 20, with an enlargement at the lock 6;
Figure 8 shows the device 1 installed in the shaft 2, in the initial position, sectioned through a plane substantially normal to the axis 20, with an enlargement at the lock 6.

With reference to the above figures, a fundamental feature of the device for the shaft-hub coupling, in particular for the automotive sector, according to the invention, which is identified as a whole with the reference numeral 1, is that it comprises a box-shaped body 4 adapted to be inserted inside a shaft 2 to be coupled with a hub 3. The body 4 also has removable means of engagement with the hub 3 and operable by means of a lock 6.

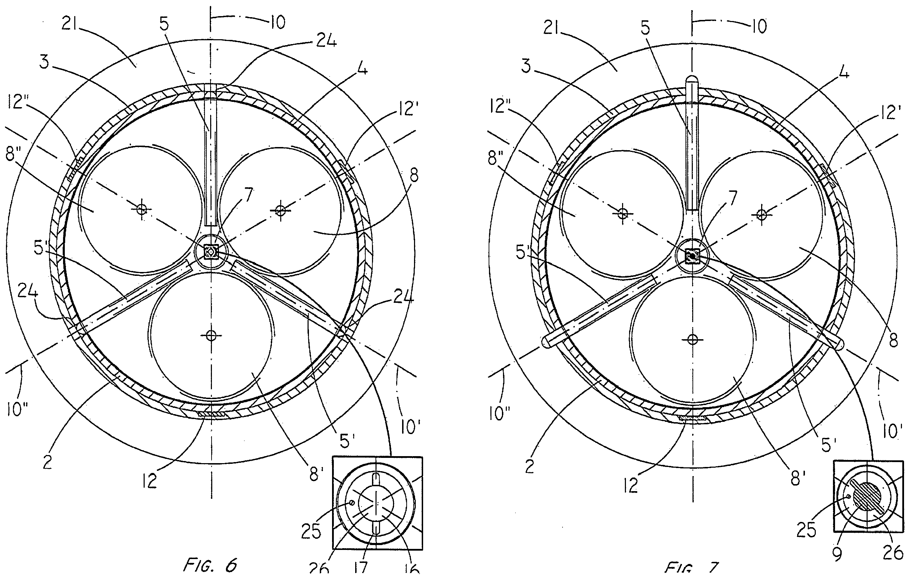

Preferably, the lock 6 is integral with the box-shaped body 4. Advantageously, the removable means comprise at least one pin 5 connecting the shaft 2 and the hub 3, which is connected to the rim 21 of the vehicle wheel. The pin 5 is movable along a direction 10 of engagement, substantially normal to the outer surface of the hub 3, between a neutral position and a interference position with the hub 3, where in the neutral position the pin does not protrude from the body 4 so that the shaft 2 and the hub 3, although coupled with each other, are free to rotate on themselves (fig. 6), while in the interference position the pin 5 comes out of the box-shaped body 4 so as to block the mutual rotation between the shaft 2 and the hub 3 (Fig. 7).

Advantageously, in the interference position, the pin 5 engages contextually at least a second through hole 22 and at least a third through hole 23, respectively defined on the shaft 2 and on the hub 3.

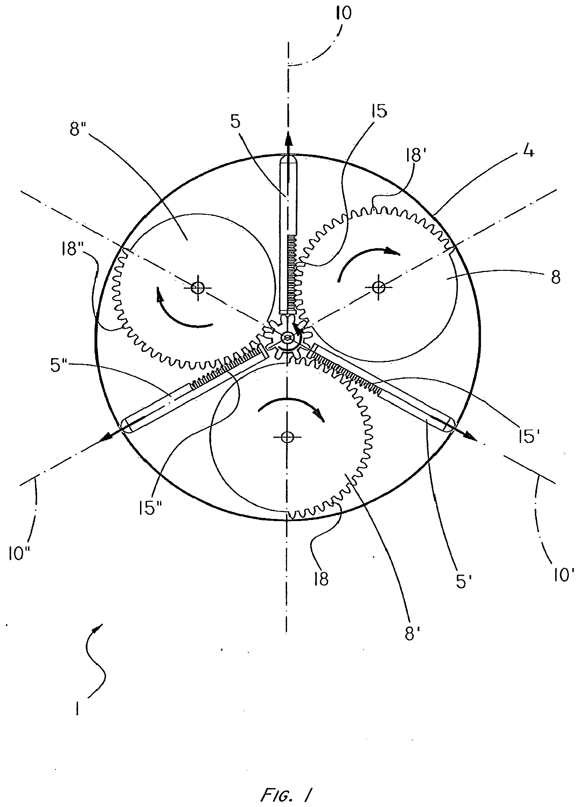

In the embodiment presented here, there are three pins 5, 5' and 5" arranged in a symmetrical manner with respect to the longitudinal axis 20 of the shaft 2, defined by the direction of development 2 itself and which also coincides with the axis of symmetry of the hub 3 (figure 1), that is, at a mutual distance of 120°.

The pins 5, 5' and 5", that come out of the box 4 by means of first through holes 24 therein, obviously defined in such a way that they are equally spaced (120°), are adapted to engage second through holes 22 defined on the shaft 2, also in a manner as to be equally spaced from each other (120°).

In the interference position, the pins 5, 5' and 5" engage in contextually the second through holes 22 and third through holes 23 defined on the hub 3, again positioned at 120° to each other, so that the three pins 5, 5' and 5" also protrude from the hub 3.

The pins 5, 5' and 5" are preferably movable between the neutral and the interference positions by means of a solar mechanism having a central wheel 7, actuated by the lock 6, for engagement with three planetary wheels 8, 8' and 8", also having their centres away from 120° degrees relative to one another. Each of the three planetary wheels 8, 8', 8" engage at least a portion of each of the three pins 5, 5', 5", in such a way that the rotation in a first direction of the wheel 7, for example a counter-clockwise rotation, corresponds to a contextual advancement of the three pins 5, 5', 5" along respective directions of engagement 10, 10', 10", towards the outside of the shaft 2. Vice versa, the rotation in a second direction, opposite the first (clockwise rotation) of the central wheel 7 corresponds to a contextual retraction of the three pins 5, 5', 5" along the same direction of engagement 10, 10', 10", towards the inside of the shaft 2.

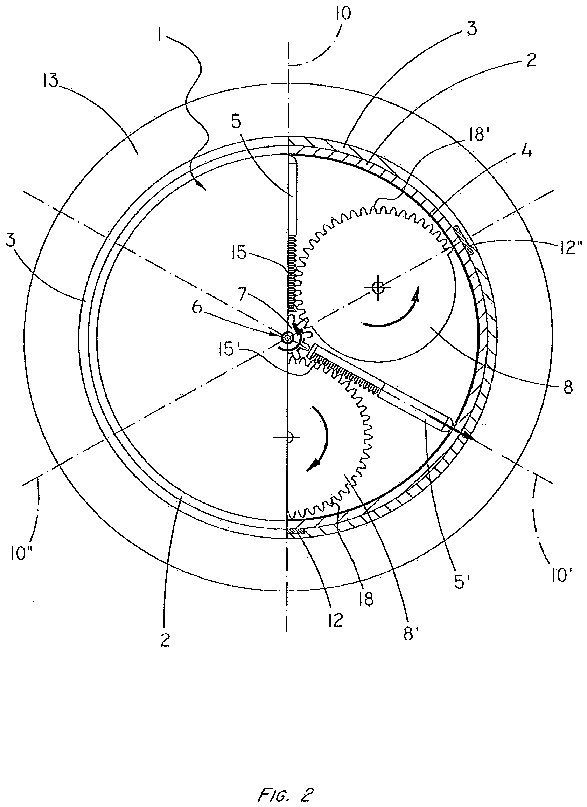

As shown in Figures 1 and 2, in this case the solar mechanism is constituted by a toothed wheel 7, engaging in contextually with a toothed portion 18, 18' and 18" of the wheels 8, 8' and 8". Each of the toothed portions 18, 18' and 18' in turn engages with another toothed portion 15, 15' and 15" respectively defined on the body of the pins 5, 5' and 5". Advantageously, means are provided for the insertion of the shaft 2 in the hub 3, in a manner that the holes 22 and 23 are centred with each other, at the direction of engagement 10, 10' and 10" corresponding to the direction of advancement of the pins 5, 5' and 5".

Preferably, these insertion means comprise at least one male element 12 protruding from the shaft 2 and which is adapted to be inserted and engaged with at least one female element 13 defined on the hub 3; as clear from Figures 6 and 7, in the example described here the device 1 has three male elements 12, 12' and 12", which protrude from the shaft 2 at a same mutual distance (120° to one another) and which are inserted on three female elements 13, which are also obviously defined on the hub 3 symmetrically with respect to the axis 20.

Preferably, the lock 6 is adapted to be controlled by a key 9. Advantageously, the key 9 engages a slot 16 defined within the central wheel 7, in such a way that a rotation of the key 9 corresponds to a rotation, equal and in the same direction, of the wheel 7 itself.

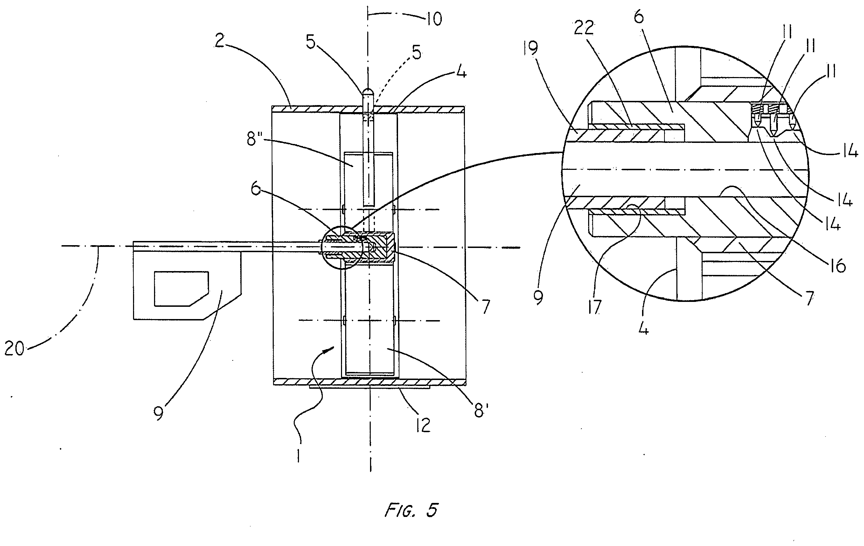

With reference to Figure 5, the key 9 has the reference wings 19, for the engagement with corresponding compartments 17 defined in the slot 16, so as to allow the mutual contact between the key and the lock 9 6 during the rotation of the key 19 itself. The key 19 further has a series of teeth and notches 11 for the engagement with the respective plates 14, known per se, mounted within the lock 6.

Necessarily, the lock 6 is associated with the central wheel 7.

In practice, when performing the first assembly of the device 1 inside a shaft 2 - which can be solidly associated with the axle shaft, by means a spline stub shaft (not shown here and of course known per se), or other appropriate joints -, it is necessary that the pins 5, 5' and 5" are completely within the box-shaped body 4, so as not to interfere with the inner walls of the shaft 2 itself.

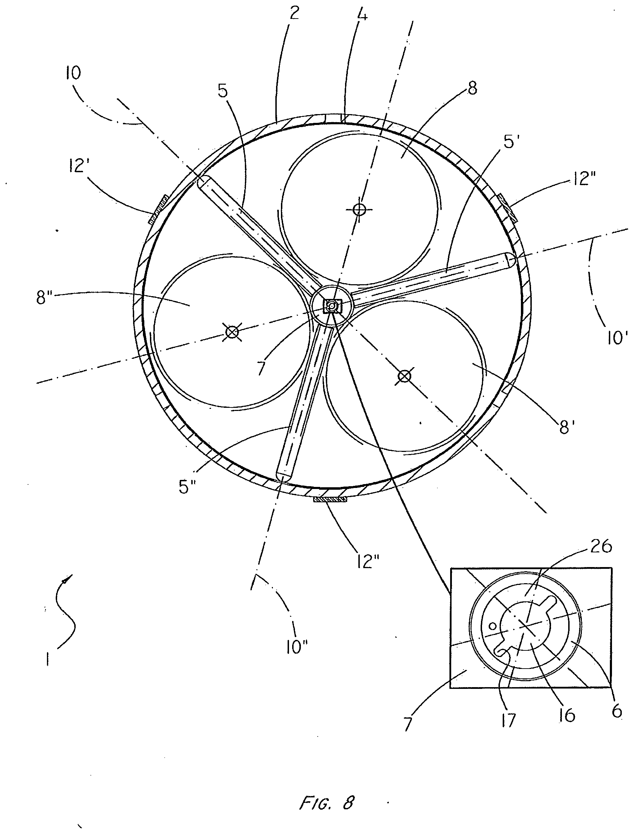

As is illustrated in Figure 8, in this initial position, the bush 26 of the lock 6 is free to rotate on itself, without any stop.

Inserted the device 1, inside the shaft 2, the bush 26 is rotated on itself, for example by means of the key 9, until the pins 5, 5' and 5" are beyond the internal perimeter of the box 4, entering the holes 24 defined on the box 4 itself, without being able to get out therefrom (fig. 6).

At this point, in order to avoid that the bush 26 goes accidentally towards the initial position, a stop is inserted to prevent its free rotation.

The stop may consist of a pin 25 contrasting the wings 19 of the key 9; in this way, when the wings abut on the pin 25, they prevent the bush from rotating.

By rotating again the key 9, the pins will be brought in an interference position, that is, in engagement with the holes 24, the holes 22 (defined on the shaft 2) and the holes 23 (defined on the hub 3), protruding from the latter and therefore preventing the mutual rotation between the shaft 2 and the hub 3.

The key 9 is then extracted from the lock 6.

In this configuration, the vehicle is operating normally.

In the case in which there is a need to change the wheel for any reason (puncture, tire damage, need for seasonal replacement of tires, etc.), the user inserts the key 9 in the slot 16 of the lock by meshing the wings 19 with the compartments 17 and the series of teeth and notches 11 with the plates 14.

When rotating the key 19, for example in the clockwise direction, the bush 26 also rotates and as a result the pins are retracted inside the shaft 2, from the interference position to the neutral position, in which the holes 23 defined on the hub are no longer engaged.

In this way, therefore, also the hub 3 supporting the rim 21 is free relative to the shaft 2 (and relative to the axle shaft associated therewith), and the wheel to be changed is extracted.

To mount the new wheel, for example the spare wheel, it is only necessary, to couple the hub 3 to the shaft 2 through the insertion means (12, 12', 12" and 13) and to rotate the key 9 in the opposite direction (now the counter-clockwise direction) in such a way that the rotation of the central wheel 7 results in the counter-rotation of the wheels 8, 8' and 8" and the consequent advancement of the pins 5, 5' and 5", which will return to the interference position engaging the holes 22 and 23.

In this configuration, shaft 2 and hub 3 are again locked to each other and therefore the vehicle can operate as usual.

From the above description it is thus evident that the invention achieves the intended task and objects, and in particular the fact is stressed that a device is provided for the shaft-hub coupling, in particular for the automotive sector, that is simple and quick to uncouple and couple again, and that is safe and robust too.

In particular, the development in the automotive sector of the coupling device according to the invention allows any user to change a damaged or punctured wheel in a very simple manner, even in extreme conditions. Another advantage of the invention is given by the fact that, since the locking and unlocking of the shaft and the hub does not take place by means of bolts or other similar connections, but by means of a lock operated by a key, it is avoided the use of specific or dedicated tools, with the exception of a key.

The changing of the damaged wheel will be possible in a few minutes, eliminating all the problems and difficulties typically encountered in the traditional procedure, especially under extreme conditions (rain, cold, darkness...).

Furthermore, another advantage of the invention is the fact that by customizing and making unique the lock, it will be virtually impossible for thieves and criminals to remove the wheels from the vehicle, without the correct key.

Another advantage of this device for the shaft-hub coupling, in particular for the automotive sector, is that, since the use of force to unscrew oxidized or too tight nuts is not necessary, it is possible to prevent all the issues, incidents and injuries arising from clumsy attempts to change the wheels of the vehicle.

Another advantage of the device according to the invention is to have created a new type of shaft-hub coupling, which is simple to implement, which can be used in any mechanic fields.

Last but not least, the use of means readily available commercially, such as a lock and a toothed wheel mechanism, and the use of common materials (for example steels or metal alloys), make the device for the shaft-hub coupling economically competitive.

The invention thus conceived is susceptible to numerous modifications and variations, all falling within the inventive concept.

Further, all the details will be replaced by other technically equivalent elements.

In practice, the materials employed, as well as the dimensions, may be different according to necessities, provided that they are consistent with the realization purpose.

## Claims

1. A device for the shaft-hub coupling, in particular for the automotive sector, **characterized in that** it comprises a box-like body (4) arranged to be inserted inside a shaft (2) to be coupled with a hub (3), having removable means (5, 5', 5") of engagement with said hub (3), said removable means (5, 5', 5") being actuatable by means of a lock (6).

2. Device according to claim 1, **characterized in that** said lock (6) is integral with said box-like body (4).

3. Device according to claim 1 or 2, **characterized in that** said removable means (5, 5', 5") comprise at least one pin (5) connecting said shaft (2) and said hub (3), movable along a direction of engagement (10) substantially normal to the outer surface of said hub (3), between a neutral position, in which said shaft (2) and said hub (3) are coupled and free to rotate about themselves, and an interference position, in which said pin (5) protrudes from said box-like body (4) so as to block the mutual rotation between said shaft (2) and said hub (3).

4. Device according to claim 4, **characterized in that**, in the interference position, said at least one pin (5) engages contextually at least a second through hole (22) and at least a third through hole (23), respectively defined on said shaft (2) and on said hub (3).

5. Device according to claim 3 or 4, **characterized in that** said removable means (5, 5', 5") comprise three pins (5, 5', 5") arranged to be moved between said neutral position and said position of interference by means of a solar mechanism (7, 8, 8', 8") having a central wheel (7) actuated by said lock (6) for engagement with three planetary wheels (8, 8', 8"), each of said three planetary wheels (8, 8 ', 8 ") being for engagement with at least a portion of each of said three pins (5, 5', 5"), in such a way that the rotation in a first direction of said central wheel (7) corresponds to a contextual advancement of said three pins (5, 5', 5") along a direction of engagement (10, 10', 10") and, vice versa, the rotation in a second direction, opposite the first, of said central wheel (7) corresponds to a contextual retraction of said three pins (5, 5', 5") along the same direction of engagement (10, 10', 10").

6. Device according to claim 5, **characterized in that**, in the interference position, said three pins (5, 5', 5") are of contextual engagement for second through holes (22) and third through holes (23), defined respectively on said shaft (2) and on said hub (3).

7. Device according to claim 6, **characterized in that** it comprises insertion and guiding means (12, 12', 12", 13) of said shaft (2) in said hub (3), in such a way that said second through holes (22) and third through holes (23) are mutually centred, in correspondence with the direction of engagement (10, 10', 10") corresponding to the direction of advancement of said three pins (5, 5' 5").

8. Device according to claim 7, **characterized in that** said insertion means (12, 12', 12", 13) comprise at least one male element (12, 12', 12") protruding from said shaft (2) arranged to be engaged with at least one female element (13) defined on said hub (3).

9. Device according to one or more of claims 1 to 8, **characterized in that** said lock (6) is arranged to be controlled with a key (9).

10. Device according to claim 9, **characterized in that** said key (9) engages a slot (16) defined within said central wheel (7), in such a way that a rotation of said key (9) corresponds to a rotation of said central wheel (7).
